# EUROPEAN PATENT APPLICATION

(11) **EP 4 678 380 A1**
(43) Date of publication of application: **14.01.2026**
(21) Application number: 24766871.8
(22) Date of filing: 21.02.2024
(51) Int. Cl.: B29C 64/314, B29C 64/153, B29C 64/379, B33Y 40/20, B33Y 70/00, B33Y 80/00, C08J 3/12, C08L 1/02, C08L 23/00, C08L 33/04, C08L 63/00, C08L 67/00, C08L 77/00, C08L 101/00

(54) **POWDER MATERIAL FOR THREE-DIMENSIONAL SHAPING AND THREE-DIMENSIONALLY SHAPED OBJECT**

(30) Priority: 03.03.2023 JP 2023032818; 29.05.2023 JP 2023087843
(71) Applicant: Nippon Paper Industries Co., Ltd., Tokyo 114-0002 (JP)
(72) Inventor: DATE, Takashi, Tokyo 114-0002 (JP); INOUE, Ryota, Tokyo 114-0002 (JP)
(74) Representative: Carpmaels & Ransford LLP
(86) International application number: PCT/JP2024/006185
(87) International publication number: WO 2024/185500

(57) **Abstract**

Provided is a powder material for three-dimensional shaping which comprises: a resin suitable for three-dimensional shaping with a powder bed fusion type laser-sintering 3D printer, and a cellulose material. The powder material for three-dimensional shaping comprises a powder containing both a resin and a cellulose material, the content of the cellulose material being 2.0-30.0 mass%. In volume-based particle diameters of the particles constituting the powder, the cumulative frequency of particles of 100-300 µm is 30.0% or greater.

## Description

### TECHNICAL FIELD

The present invention relates to a powder material for three-dimensional shaping and a three-dimensionally shaped article.

### BACKGROUND ART

Production of three-dimensionally shaped articles by a 3D printer has been of interest recently. A 3D printer enables production of three-dimensionally shaped articles without use of molds, and production of three-dimensionally shaped articles having complex shapes that are difficult to produce with molds, for example. There are various methods of three-dimensional shaping using a 3D printer. Examples thereof include: fused deposition modeling (FDM), which includes melting a resin filament and extruding and depositing the resultant; material jetting, in which a resin discharged from an inkjet head is cured by UV radiation; stereolithography apparatus (SLA), which includes laminating laser-cured layers of a photocurable resin solution; and powder bed fusion (PBF), which includes fusing and bonding deposited layers of a powder material. In PBF, one including sintering a powder by laser is particularly called selective laser sintering/melting (SLS/SLM).

Previously, a typical example of application of 3D-printer shaping was prototyping of models before fabricating a final product (rapid prototyping), using a 3D printer such as a FDM printer that is able to easily give a three-dimensionally shaped article. Recently, it has been possible to obtain shaped articles having a large strength using a 3D printer according to selective laser sintering/melting (SLS/SLM) processing in powder bed fusion (PBF), and use of such a 3D printer is gradually increasing for production of actual parts.

For PBF 3D printers, powder materials are used. As the powder material, a metal powder or a resin powder is used, and recently, use of resin powders has been growing. Thermoplastic resin with crystallinity is mainly used as the resin powder, and examinations are carried out for commodity plastics (e.g., PE and PP), commodity engineering plastic materials (e.g., PBT, PA, POM), and also super engineering plastic materials having high melting point and/or high heatproof temperature (e.g., PPS, PFA, PAEK, PI). Furthermore, a method including mixing the resin powder with glass beads is used as a means to improve the strength of these resins. Mixing the resin powder with glass beads actually improves the strength but causes the following problems, for example: a resulting shaped article is heavier due to the larger specific gravity of glass; a resulting shaped article has an uneven strength due to a large difference in the specific gravity between glass beads and a resin; and glass recycling is impossible.

On the other hand, cellulose nanofibers (CNFs), which are derived from woods, have attracted attention and used for the purpose of improving the strengths of thermosetting resins and thermoplastic resins. Cellulose nanofibers are characterized in that they are derived from biomass, are lighter than glass beads, and can be recycled and therefore sustainable. For these reasons, cellulose nanofibers have begun to be examined also for resin materials for 3D printers, as an alternative to glass beads and glass fibers, but they have not been widespread yet. As an example of use of a cellulose nanofiber for materials for 3D printers, PTL 1 discloses a material for shaping using a 3D printer, the material including a cellulose nanofiber, a dispersant, and a resin component, as main components. PTL 1 discloses that this material is shaped into a continuous line form to use for 3D printers of fused deposition modeling (FDM), but does not disclose that the material is made into a powder to use as a material for PBF 3D printers. As a powder material suitable for producing a three-dimensionally shaped article by a 3D printer of selective laser sintering type, PTL 2 discloses a powder material for three-dimensional shaping, the material including a resin powder and a cellulose nanofiber, having an average particle size (d50) of 30 to 80 µm, and having a cellulose nanofiber content of 2 to 15 wt%. PTL 2 suggests that in the volume-weighted particle size distribution of the powder material determined by laser diffraction/scattering method, the cumulative frequency of particles having a particle size less than 38 µm is preferably 10% or more, and that the cumulative frequency of particles having a particle size of 115 µm or less is preferably 85% or more.

### CITATION LIST

### PATENT LITERATURE

PTL 1: JP 6153680B
PTL 2: JP 2021-53862A

### SUMMARY OF INVENTION

### TECHNICAL PROBLEM

The present inventors have tested the powder material disclosed in PTL 2 using a selective laser sintering 3D printer using powder bed fusion method (PBF/SLS), and as a result, have found that it is not possible to feed the material successfully to result in unevenness of the inside and surface of the three-dimensionally shaped article. An object of the present invention is to provide a powder material for three-dimensional shaping, the material including a resin and a cellulose material and being suitable for production of three-dimensionally shaped articles by a selective laser sintering 3D printer using powder bed fusion method (PBF/SLS).

### SOLUTION TO PROBLEM

As a result of earnest studies, the present inventors have found that the feed of a powder material for three-dimensional shaping can successfully progress to produce a three-dimensionally shaped article having an evener surface when the powder material contains not only particles having smaller diameters but also somewhat large particles in a certain amount, specifically, when the cumulative frequency of particles having a volume-weighted particle size within a range from 100 to 300 µm is 30.0% or more, and thus have complete the present invention. The present invention includes the following.
[1] A powder material for three-dimensional shaping, consisting of a powder containing a resin and a cellulose material and having a cellulose material content of 2.0 to 30.0 mass%, wherein in particles composing the powder, a cumulative frequency of particles having a volume-weighted particle size within a range from 100 to 300 µm is 30.0% or more.
[2] The powder material for three-dimensional shaping according to [1], wherein the particles composing the powder have a volume-weighted median diameter (d50) of 85 to 200 µm.
[3] The powder material for three-dimensional shaping according to [1] or [2], wherein in the particles composing the powder, the cumulative frequency of the particles having a volume-weighted particle size within a range from 100 to 300 µm is 40.0% or more.
[4] The powder material for three-dimensional shaping according to [1] or [2], a difference between an initiation temperature and an end temperature of recrystallization is 20.0°C or less, as measured by a differential scanning calorimeter.
[5] The powder material for three-dimensional shaping according to any one of [1] to [4], wherein the resin includes a thermoplastic resin.
[6] The powder material for three-dimensional shaping according to any one of [1] to [5], wherein the cellulose material includes a fine cellulose fiber, pulp, or a mixture thereof.
[7] The powder material for three-dimensional shaping according to [6], wherein the fine cellulose fiber is a modified fine cellulose fiber.
[8] The powder material for three-dimensional shaping according to [7], wherein the modified fine cellulose fiber is an esterified cellulose fiber.
[9] The powder material for three-dimensional shaping according to any one of [1] to [8], wherein the resin includes at least one selected from a polyamide, a polyolefin, or a polyester resin.
[10] The powder material for three-dimensional shaping according to [9], wherein the polyamide is at least one selected from PA6, PA11, PA12, or PA610.
[11] A three-dimensionally shaped article containing a thermally joined body of the powder material for three-dimensional shaping according to any one of [1] to [10].
[12] A three-dimensionally shaped article containing thermally joined body of the powder material for three-dimensional shaping according to any one of [1] to [10], and an epoxy resin and/or acrylic resin in a gap in the thermally joined body.

### ADVANTAGEOUS EFFECTS OF INVENTION

The feed of the powder material for three-dimensional shaping of the present invention can successfully progress in a selective laser sintering 3D printer using powder bed fusion method (PBF/SLS), and as a result, a three-dimensionally shaped article having an evener surface can be obtained.

### BRIEF DESCRIPTION OF DRAWINGS

Fig. 1 shows digital microscope images of the appearances of three-dimensionally shaped test pieces produced in Examples and Comparative Example. The left is of the test piece obtained in Example 2 (the result of the evaluation of the surface: 3 points); the center is of the test piece obtained in Example 3 (the result of the evaluation of the surface: 2 points); and the right is of the test piece obtained in Comparative Example 1 (the result of the evaluation of the surface: 1 point).
Fig. 2 shows the DSC curve of the powder material in Reference Example.
Fig. 3 shows the DSC curve of the powder material in Example 2.

### DESCRIPTION OF EMBODIMENTS

The powder material for three-dimensional shaping of the present invention (hereinafter, simply referred to as "powder material") is a powder material containing a resin and a cellulose material, and in the particles composing the powder, the cumulative frequency of particles having a volume-weighted particle size within a range from 100 to 300 µm is 30.0% or more. The powder material has a cellulose material content of 2.0 to 30.0 mass%. The powder material of the present invention can be successfully fed in a 3D printer, and enables production of a three-dimensionally shaped article having excellent mechanical properties and also an evener surface and inner structure when it is applied to shaping using a 3D printer of selective laser sintering type (SLS) according to powder bed fusion (PBF) method (hereinafter, referred to as "PBF/SLS 3D printer"). The mechanical properties include, but not limited to, flexural modulus and flexural strength, for example.

### (Resin)

The powder material of the present invention contains a resin. The resin may include a thermoplastic resin, or may consist of a thermoplastic resin. The resin may include a thermoplastic resin and a thermosetting resin. Examples of the thermosetting resin is an epoxy resin.

The thermoplastic resin is preferably a crystalline resin. The crystalline resin is suitable for shaping a three-dimensionally shaped article by a PBF/SLS 3D printer. Generally, the crystalline resin has a melting point and a recrystallization temperature after melting. The powder material containing a crystalline thermoplastic resin is preferable because, in a PBF/SLS 3D printer, such a powder material can be heated to a temperature higher than the melting point and formed into a joining layer (thermally joined body of the powder material), and then a next joining layer can be formed of the powder material before the temperature of the preceding layer decreases to a temperature less than the recrystallization temperature, whereby the joining layers can be joined to each other more securely. The difference between the recrystallization temperature and the melting point is preferably 30°C or more, and more preferably 40°C or more. The recrystallization temperature and the melting point can be determined by differential scanning calorimetry (DSC).

The resin may include at least one selected from a polyamide, a polyolefin, or a polyester. A polyamide, a polyolefin, and a polyester are each generally a thermoplastic resin and a crystalline resin. For a polyamide, a polyolefin, and a polyester, the difference between the recrystallization temperature and the melting point thereof is generally 30°C or more. The resin powder may include a resin other than the above-described resins. Examples of the crystalline resin and the thermoplastic resin are not limited to the above. Examples of a resin used for a PBF/SLS 3D printer include, in addition to those described above, a polyether, a polyphenylene sulfide, a fluororesin, and an aromatic polyether ketone. The resin preferably includes a polyamide since such a resin can shape a three-dimensionally shaped article particularly excellent in the mechanical properties. The polyamide may be, for example, at least one selected from PA6 (also called polyamide 6 or nylon 6), PA11, PA12, or PA610, but is not limited thereto. Examples of the polyolefin include, but not limited to, polyethylene and polypropylene. The polyester is preferably an aliphatic polyester resin, and examples thereof include, but not limited to, polyhydroxyalkanoates (PHA), such as polylactic acid (PLA), poly 3-hydroxybutyric acid (PHB), 3-hydroxybutyrate 3-hydroxyhexanoate copolymer (PHBH), and polyhydroxyvaleric acid; a polymer of an aliphatic dicarboxylic acid and an aliphatic diol, such as polyethylene adipate and polybutylene succinate (PBS); and a polymer by ring-opening polymerization of lactone, such as polycaprolactone (PCL). Furthermore, a polybutylene adipate terephthalate resin (PBAT), PS resin, and ABS resin, which are aromatic polyesters, can also be used. A copolymer resin, an alloy resin, and a graft polymer with any of resins described above, and recycled resins and resins subjected to thermal history of the resins described above can also be used.

### (Cellulose material)

The powder material of the present invention contains a cellulose material. Types of the cellulose material used are not particularly limited. Examples of types of the cellulose material include those derived from plants, animals (e.g., sea squirt), algae, microorganisms (e.g., acetobacter), and microbial products, and any of these can be used. A cellulose material derived from a plant or a microorganism is preferable, and that derived from a plant is more preferable. The following can also be used as the cellulose material: pulp derived from a plant (for example, wood, bamboo, hemp, jute, kenaf, cotton, clothing (or used clothing) made of hemp or cotton, and agricultural land waste), such as soft wood unbleached kraft pulp (NUKP), soft wood bleached kraft pulp (NBKP), hard wood unbleached kraft pulp (LUKP), hard wood bleached kraft pulp (LBKP), soft wood unbleached sulfite pulp (NUSP), soft wood bleached sulfite pulp (NBSP), and thermomechanical pulp (TMP); unused machine-made paper and Japanese paper, recycled pulp derived from waste paper, and nonwoven fabric made from cellulose. These cellulose materials can be those that have or have not undergone chemical and/or mechanical treatment. Examples of a known method for chemically treating a cellulose material include, but not limited to, a method including introducing carboxyl groups into surfaces of cellulose chains in a cellulose material with TEMPO (2,2,6,6-tetra methyl-1-pyperidinyloxy radical) as a catalyst; a method including introducing phosphate groups, carboxymethyl groups, or sulfonate groups into cellulose chains; and a method including introducing hydrophobic groups into surfaces of cellulose chains to hydrophobize a cellulose material. The hydrophobic group may be an acetyl group, for example, or may also be another hydrophobic functional group such as other ester groups. Examples of a known method for mechanically treating a cellulose material include, but not limited to, a method including wet- or dry-treating using a high-pressure homogenizer, a microfluidizer, or a grinder, or by freeze-drying and grinding, or ultrasonic defibrillation of fiber. A cellulose material or chemically treated cellulose material may be mechanically treated to thereby defibrillate cellulose fibers to give fine cellulose fibers.

One example of the method for mechanically treating a cellulose material is a method including melt-kneading the above-described resin with the cellulose material. This enables defibrillation of the cellulose material in the resin, whereby the cellulose material can be uniformly dispersed in the resin. On this occasion, it is preferable to use a chemically treated cellulose material, particularly a hydrophobized cellulose material since such a cellulose material is easy to disperse in the resin and also tends to accelerate defibrillation. Specific examples of such a method include, but not limited to, a method disclosed in JP 6818507B and a method disclosed in JP 6091589B.

As used herein, "pulp" refers to pulp derived from plants or wastepaper and pulp obtained by chemically treating them as described above. Generally, pulp is fibers having a fiber width of about 10 to 50 µm and a fiber length of about 0.5 to 5 mm. As used herein, "fine cellulose fiber" refers to a fiber obtained by defibrillating a cellulose material, such as pulp, to a fiber width of 1 µm or less. Generally, a fine cellulose fiber can be obtained by mechanically treating a cellulose material such as pulp described above. Among fine cellulose fibers, a chemically treated fine cellulose fiber is particularly referred to as a "modified fine cellulose fiber". The chemical treatment for the modified fine cellulose fiber may be carried out before the mechanical treatment or after the mechanical treatment. Examples of the chemical treatment are as described above. Particularly, an "esterified fine cellulose fiber", which has undergone a modifying treatment by esterification such as acetylation, is one of preferable modes.

The cellulose material in the powder material of the present invention may include untreated or chemically treated and/or mechanically treated pulp or fine cellulose fiber, and may include both of them. In other words, the cellulose material in the powder material may consist of that defibrillated to a fiber width of nano or micro order or may include that having a fiber width larger than that.

The cellulose material may act as a reinforcing component to improve the mechanical properties of the three-dimensionally shaped article. When the content of the cellulose material in the powder material is 2.0 mass% or more, the cellulose material reliably acts as a reinforcing component. Meanwhile, a material consisting of a fine powder such as the powder material of the present invention generally has a large adhesive force between particles and a small heat capacity, and is therefore prone to agglomeration in a preheating tank of a 3D printer. Thus, such a material may cause thermal fusion bonding between fine particles even when the heating temperature is less than the melting point. If the fine powder agglomerates, the flow (feed) of the powder material into a shaping chamber is nonuniform to cause a defect such as warping or chipping in the three-dimensionally shaped article, or shaping itself may be difficult. In the powder material of the present invention, the cellulose material also can act as an agglomeration inhibitor to inhibit agglomeration of the fine powder, and when the content of the cellulose material in the powder material is 2.0 mass% or more, the cellulose material reliably acts as an agglomeration inhibitor. As for the upper limit, when the content of the cellulose material is 30.0 mass% or less, combustion of the cellulose material by laser irradiation can be suppressed. As for the lower limit, the content of the cellulose material is more preferably 2.5 mass% or more, and as for the upper limit, it is more preferably 10.0 mass% or less.

### (Other materials)

The powder material of the present invention may include any material other than the resin or the cellulose material. Examples of the other materials include, but not limited to, a colorant, an antistatic agent, a heat stabilizer, a flame retardant, an antioxidant, a viscosity modifier, a plasticizer, an ultraviolet absorber, a water resistant additive, an elastomer, natural rubber, a compatibilizer, a known cellulose modifier, and a filler. The other material may be an organic material or an inorganic material. In a case where the other materials are included, the content thereof in the powder material may be, for example, 5.0% by mass or less, 4.0% by mass or less, or 3.0% by mass or less, in total. In a case where the other materials are included, the lower limit of the content thereof may be, for example, 0.3% by mass or more, but not limited thereto.

Examples of the material for the filler include carbon, glass, metal, metal oxide, and silica. Examples of the metal oxide include alumina and titania. Examples of the form of the filler include fiber, bead, and flake. The carbon may be a carbon fiber. The glass may be glass fiber or glass bead. The filler is not limited to the above-described examples.

### (Method for forming powder material)

The powder material of the present invention may be formed by, for example, mixing the resin and the cellulose material, forming a shaped product thereof (for example, a sheet, strands, or flakes), and grinding it. The shaped product can be formed by, for example, melt-kneading the resin and the cellulose material using a twin screw extruder or the like and shaping the resultant. Specific examples of such a method include, but not limited to, the method disclosed in JP 6818507B and the method disclosed in JP 6091589B. The grinding may be freeze-grinding, for example. The method for forming the powder material is not limited the example described above.

### (Particle size of powder material)

Particles composing the powder material of the present invention include not only particles having a small size and also somewhat large particles in a certain amount. Specifically, the cumulative frequency of particles having a volume-weighted particle size within a range from 100 to 300 µm (hereinafter, also simply referred to as "cumulative frequency") is 30.0% or more. When the particle sizes of particles composing the powder satisfy such a condition, feed of the material can progress successfully in a PBF/SLS 3D printer, and as a result, a three-dimensionally shaped article having an even surface can be obtained. The above-described cumulative frequency is more preferably 40.0% or more. The cumulative frequency can be obtained from a volume-weighted particle size distribution determined according to laser diffraction/scattering method.

The powder material of the present invention may include smaller particles having a particle size less than 100 µm. However, such smaller particles are prone to agglomeration in a preheating tank of a 3D printer to have too large adhesion between the particles, and as a result, it tends to be difficult to obtain an even three-dimensionally shaped article. Accordingly, it is preferable that the amount of the smaller particles should be smaller. Coarse particles having a size more than 300 µm, which is too large, lead to difficulty in successful progress of the feed of the powder material to result in an uneven surface of a shaped article after shaping, which affects quality of the shaped article and also gives poor appearance. Accordingly, such coarse particles are preferably removed. The particle size and the above-described cumulative frequency of the powder material can be regulated by, for example, classification with a sieve having desired opening after grinding the shaped product including the resin and the cellulose material. For example, the powder may be passed through an 80-mesh sieve (opening: 173 µm) to remove coarse particles therefrom. Also, with a sieve of 106 µm-opening, smaller particles passing through the sieve can be removed. Either one or both of these classifying treatments may be carried out, as long as the cumulative frequency according to the present invention is satisfied. The type of the sieve is not particularly limited, and any sieve of a mesh size other than the above also can be used. If a powder material satisfies the cumulative frequency according to the present invention, these classifying treatments may not be carried out.

The particles composing the powder material preferably have a volume-weighted median diameter (d50) of 85 to 300 µm, more preferably 85 to 200 µm, more preferably 85 to 160 µm. In a case where the powder material has a median diameter within such a range, it is easy to feed the powder material to a 3D printer uniformly. Particularly, in a case where the median diameter is within a range from 85 to 160 µm, it is easy to feed the powder material uniformly when the powder material is further fed to a site irradiated with laser in a 3D printer (particularly a site having a large irradiation area). This allows for more reliable joining between joining layers (thermally joined body) of the powder material to easily obtain a three-dimensionally shaped article having excellent mechanical properties and also having an even inner structure. The median diameter can be obtained as a d50 from a volume-weighted particle size distribution determined according to laser diffraction/scattering method.

### (Recrystallization temperature of powder material)

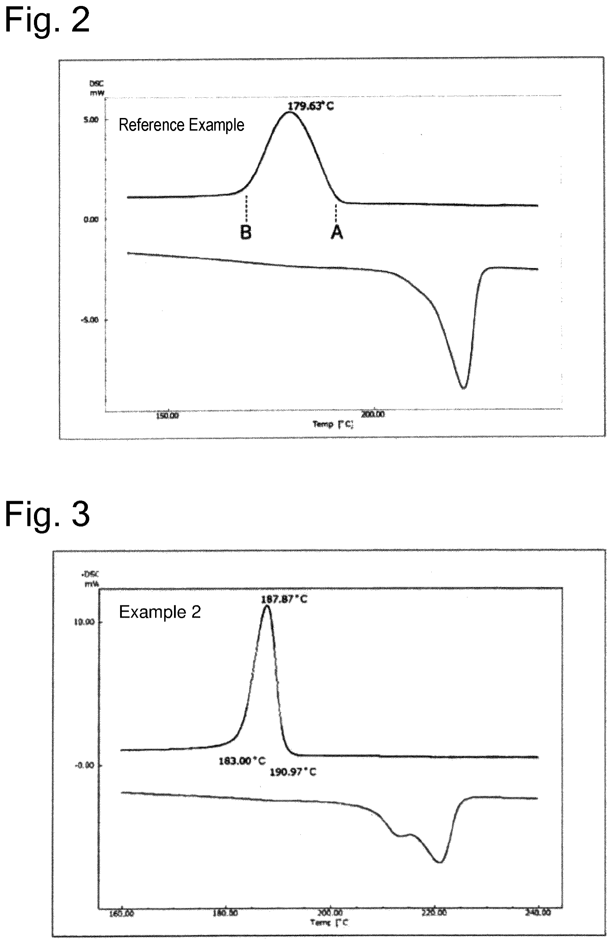

In the powder material of the present invention, a difference between the initiation temperature and the end temperature of recrystallization is preferably 20.0°C or less, more preferably 15.0°C or less, even more preferably 10.0°C or less, as measured using a differential scanning calorimeter (DSC). In the present invention, the initiation temperature of recrystallization and the end temperature of recrystallization can be determined using a DSC. In a DSC curve, a peak in a chart under temperature decrease condition indicates an exothermic reaction in a recrystallization process of a substance to be analyzed (Fig. 2). In the present invention, the initiation temperature of recrystallization refers to the temperature at the intersection of a straight line and a tangential line on the temperature curve of the recrystallization process in a DSC curve (A in Fig. 2), wherein the straight line is drawn by extending the base line on the higher temperature side toward the lower temperature side at the initiation of recrystallization, and the tangential line is drawn on the point at which the slope of the curve of the peak is maximized. The end temperature of recrystallization refers to the temperature at the intersection of a straight line and a tangential line on the temperature curve of the recrystallization process in a DSC curve (B in Fig. 2), wherein the straight line is drawn by extending the base line on the lower temperature side toward the higher temperature side at the end of recrystallization, and the tangential line is drawn on the point at which the slope of the curve of the peak is maximized. The temperature at the top of the peak is referred to as a peak temperature of crystallization.

The powder material of the present invention, which contains the cellulose material in the base resin, shows a phenomenon in which the recrystallization rate is accelerated to show a small difference between the initiation temperature and the end temperature of recrystallization. It is considered that since the recrystallization rate is thus accelerated, an oriented layer of the neat resin, which is called a transcrystal layer, is produced when the neat resin is recrystallized, and that a shish kebab structure is generated in the transcrystal layer due to the interaction between the resin and the cellulose material to improve the strength of the shaped article.

### (Three-dimensionally shaped article)

The three-dimensionally shaped article of the present invention is a shaped article obtained by applying the powder material of the present invention to shaping by a PBF/SLS 3D printer. Such a three-dimensionally shaped article is composed of a joined body (thermally joined body) of the powder material. A three-dimensionally shaped article is typically produced using a PBF/SLS 3D printer in the following manner. A PBF/SLS 3D printer generally includes a shaping chamber, preheating tanks on both sides of the shaping chamber, a scraper (re-coater), and a laser-radiating device. The bottom plates of the preheating tanks and the shaping chamber are vertically movable. The powder material is contained in the preheating tanks in advance, and generally preheated at a temperature slightly below the melting point of the resin included in the powder material. The preheated powder material is allowed to flow from the preheating tanks on the right and left sides, by slide of the scraper (recoater), into the shaping chamber at the center, which is adjusted to a temperature slightly below the melting point of the resin (a temperature between the melting point and the recrystallization temperature of the resin), to form a layer having a predetermined thickness in the shaping chamber. The predetermined thickness varies according to the size of the printer and others, and is typically about 100 to 300 µm. Next, the above-described powder material layer in the shaping chamber is irradiated with laser from the laser-radiating device to form a joining layer (thermally joined body) of the powder material in a predetermined pattern. The flow of the powder material from the preheating tanks to the shaping chamber and the formation of the joining layer by irradiation with laser are repeated to shape a three-dimensionally shaped article. With the progress of the shaping, the bottom plates of the preheating tanks are raised and the bottom plate of the shaping chamber is moved down. The configuration of the printer is not limited to the above example, as long as it utilizes the thermally joining of the powder material by laser irradiation. The specific operation method of the printer is also not limited, and any arbitrary steps may be included as long as a three-dimensionally shaped article is obtained. For example, a post-processing, which will be described later, may be carried out on the three-dimensionally shaped article obtained.

Although the powder material of the present invention is a material particularly suitable to shaping of a three-dimensionally shaped article using a PBF/SLS 3D printer, it can be used for other applications.

The three-dimensionally shaped article obtained in the above-described manner may include a gap in the thermally joined body of the powder material. Into the gap in the thermally joined body of the powder material, an additional resin can be introduced. In other words, the three-dimensionally shaped article may have a structure which includes a base structure composed of joined powder material (thermally joined body of the powder material) and an additional resin introduced into a gap between the joined powder material in the base structure to impart the physical properties suitable to the intended use. The introduction of the additional resin can further improve the mechanical properties of the three-dimensionally shaped article.

Examples of the additional resin inserted between the layers of the powder material may be an epoxy resin and/or an acrylic resin, but not limited thereto.

The three-dimensionally shaped article with the additional resin introduced can be produced by, for example, carrying out a post-processing to introduce an additional resin into a resulting three-dimensionally shaped article after the article is shaped using a PBF/SLS 3D printer. In the post-processing, for example, a precursor of the additional resin (e.g., an epoxy resin) is introduced into the gap in the thermally joined body of the powder material, followed by carrying out treatment (e.g., curing) on the precursor introduced. In the post-processing, a solution including the additional resin (e.g., an acrylic resin) can be introduced into the gap in the thermally joined body of the powder material, followed by, for example, drying to remove the medium from the solution introduced. The solution also may be a resin in a solution state.

Specific examples of the shape or use of the three-dimensionally shaped article include, but not limited to, known members made of resin, including: exterior or interior parts of transportation equipment such as a bumper, a door trim, and a wheel cover for vehicles; medical instrument such as prosthetic foot, prosthetic hand, and treatment instrument; electronic component, parts of lighting equipment, sports equipment, and molds (including prototype molds).

### EXAMPLES

The present invention will now be described in more detail by way of examples. The present invention is not limited to the specific modes shown below.

### (Example 1)

Soft wood unbleached kraft pulp (NUKP, solids content 98%) and acetic acid anhydride were mixed and heated to 80°C to carry out acetylation. The progress was monitored in terms of absorption spectrum of acetyl group (1740 cm⁻¹) in infrared (UV) absorption spectrum, and when the degree of substitution (DS) reached 0.5 to 0.9, the reaction was terminated. The mixture was washed with water to remove acetic acid as byproduct and excess acetic acid anhydride, and dried to produce acetylated NUKP.
PA6 pellets (1013B, manufactured by UBE Corporation) and the acetylated NUKP produced were melt-kneaded, and the resultant was extruded from an extruder to obtain a shaped resin product in the form of flakes (cellulose material (acetylated NUKP) content 30.0 mass%). Then the shaped resin product obtained was mixed and diluted with other PA6 pellets (1011FB, manufactured by UBE Corporation) to obtain a shaped resin product in the form of pellets having a cellulose material content of 5.0 mass%. As a result of analysis of the shaped resin product in the form of pellets, it was found that fine cellulose fibers (having a fiber width of 1 µm or less and a fiber length of 1 mm or less) generated through defibrillation of the acetylated NUKP were included. It was also found that fibers that had not undergone progress of defibrillation were also included as a part. Then, the shaped resin product obtained was freeze-ground at -90°C, followed by carrying out classifying treatment to remove smaller particles and then classifying treatment to remove large particles, to obtain the powder material according to Example 1 (cellulose material content 5.0 mass%). A test sieve having a nominal opening of 106 µm and an 80-mesh test sieve (opening 173 µm) were used for classifying treatment to remove smaller particles and that to remove large particles, respectively.

### (Example 2)

The powder material of Example 2 (cellulose material content 5.0 mass%) was obtained from the freeze-ground particles obtained in Example 1 by carrying out classifying treatment to remove large particles (with an 80-mesh test sieve) only.

### (Example 3)

The powder material of Example 3 (cellulose material content 5.0 mass%) was obtained from the freeze-ground particles obtained in Example 1 by carrying out classifying treatment to remove smaller particles (with a test sieve having a nominal opening of 106 µm) only.

### (Example 4)

The freeze-ground particles obtained in Example 1 were directly used without classifying treatment.

### (Example 5)

PA6 pellets (1013B, manufactured by UBE Corporation) and the non-modified NUKP were melt-kneaded, and a shaped resin product in the form of pellets having a cellulose material content 5.0 mass% was obtained therefrom. As a result of analysis of the pellets of the shaped resin product, it was found that fine cellulose fibers (having a fiber width of 1 µm or less and a fiber length of 1 mm or less) generated through defibrillation of the NUKP were included. It was also found that fibers that had not undergone progress of defibrillation were also included as a part. Then, the shaped resin product obtained was freeze-ground at -90°C, followed by carrying out classifying treatment (with an 80-mesh test sieve) to remove large particles, to obtain the powder material of Example 5 (cellulose material content 5.0 mass%).

### (Comparative Example 1)

A powder material composed only of smaller particles that had passed through a test sieve with a nominal opening of 106 µm used for classifying treatment, derived from the freeze-ground particles obtained in Example 1, was used.

### (Reference Example)

The powder material of Reference Example was obtained by freeze-grinding PA6 pellets (1011FB, manufactured by UBE Corporation) at -90°C and then carrying out classifying treatment to remove large particles only as in Example 2.

### (Determination of particle size)

Determination of the particle size was carried out on each powder material prepared, using a laser diffraction/scattering particle size distribution analyzer (Mastersizer (registered trademark) 3000, manufactured by Malvern Panalytical Ltd). The sum operation was carried out on the data of the particle size distribution obtained, and the cumulative frequency of particles having a particle size of 100 to 300 µm was determined. As the median diameter, the value from automated calculation by the analyzer was used. The conditions of determination were as follows.
Determination unit: wet (water)
Basis of particle size: volume-weighted
Refractive index of sample: 1.53

### (3D printer shaping)

Each of the powder materials according to Examples 1 to 5 and Comparative Example 1 was subjected to three-dimensional shaping by a PBF/SLS 3D printer (AM-E3 550-HT, manufactured by ASPECT Inc.) to prepare a test piece in accordance with JIS standard B (width 10 mm x length 80 mm x thickness 4 mm). The conditions of the three-dimensional shaping were as follows.
Type of laser: CO₂ laser
Wavelength of laser: 10.6 µm
Output of laser: 70 W
Sweeping rate of laser: 15 m/second
Thickness of joining layer: 150 µm

### (Flexural modulus and flexural strength)

The mechanical properties (flexural modulus and flexural strength) of the test piece prepared by the 3D printer shaping were evaluated in accordance with the A method defined in JIS K7171: 2016. As the tester, a precise universal testing machine (AUTOGRAPH (registered trademark) AG-Xplus, manufactured by Shimadzu Corporation) was used. The distance between the supporting points was 64 mm, and the test speed was 10 mm/min. The measurement temperature was 25°C, and the measurement humidity was 50% RH. Evaluation was carried out on three test pieces, and the average thereof was used for the flexural modulus and the flexural strength of the test piece.

### (Evaluation of surface)

The shaped article (test piece) prepared was subjected to sensory evaluation for the evenness of the surface to rate on the following 3-point scale based on the feeling when rubbing the surface of the shaped article with the fingers.
3 points: there is no uneven or rough feeling on the surface when rubbing with the fingers
2 points: although there is a rough feeling on the surface when rubbing with the fingers, the evenness is at an acceptable level.
1 point: an uneven or rough portion is clearly found on the surface only by visual check without touching with the fingers and it is not suitable for the shaped article.

### (Determination of recrystallization temperature)

5.0 mg of a powder material according to any one of Examples 1 to 5, Comparative Example 1, and Reference Example was weighed in an aluminum cell, and the cell was tightly sealed with a sealer, which was subjected to determination of the recrystallization temperature using DSC (differential scanning calorimeter DSC60 Plus, manufactured by Shimadzu Corporation). As the initiation temperature and the end temperature of recrystallization, the values calculated by a determination/analysis program for thermal analysis (Lab Solutions (registered trademark) TA, manufactured by Shimadzu Corporation) for the analyzer were used. The conditions of the determination were as follows.
Atmosphere gas: Nitrogen
Gas flow rate: 50 mL/min

Temperature control: determination was carried out on the sample using the DSC from room temperature at a temperature increasing condition of 10°C/min, and the sample was kept 250°C for 10 minutes. Then, the sample was cooled to 80°C at a temperature decreasing condition of 10°C/min. This series of the temperature increase and decrease were conducted once more, and a DSC curve was obtained from the data of the second time. From the DSC curve obtained, the initiation temperature and the end temperature of recrystallization were read, and the difference between them was calculated.

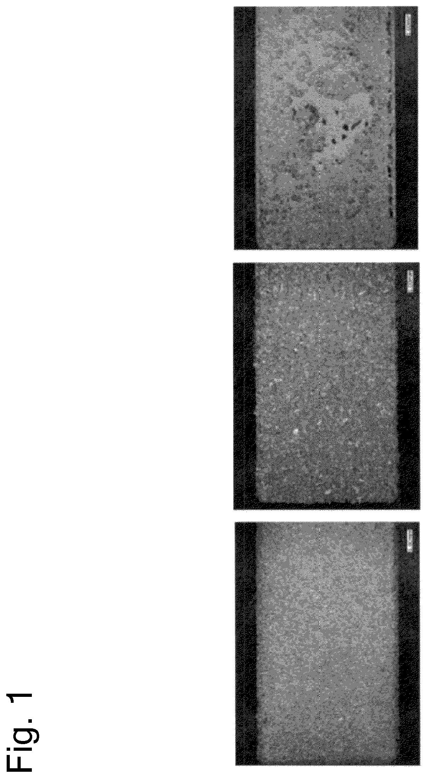

The evaluation results are shown in Table 1 below. Digital microscope images of the appearances of the shaped articles are shown in Fig. 1. In Fig. 1, the left is of the test piece obtained in Example 2 (the result of the evaluation of the surface: 3 points); the center is of the test piece obtained in Example 3 (the result of the evaluation of the surface: 2 points); and the right is of the test piece obtained in Comparative Example 1 (the result of the evaluation of the surface: 1 point). As shown in Table 1 and Fig. 1, it was demonstrated that the three-dimensionally shaped articles produced by using the powder materials according to Examples each had favorable mechanical properties (flexural modulus and flexural strength) and also had an even surface as compared with the three-dimensionally shaped article produced by using the powder material according to Comparative Example. The feed of the powder material according to Reference Example was extremely nonuniform to thereby fail in shaping of an adequate test piece.

**[Table 1]**

| | Example 1 | Example 2 | Example 3 | Example 4 | Example 5 | Comparative Example 1 | Reference Example |
|---|---|---|---|---|---|---|---|
| Cellulose material content (mass%) | 5.0 | 5.0 | 5.0 | 5.0 | 5.0 | 5.0 | - |
| 80-mesh sieve | passed | passed | - | - | passed | - | passed |
| 106 µm sieve | remaining | - | remaining | - | - | passed | - |
| Cumulative frequency of particles having particle size of 100 to 300 µm (%) | 94.5 | 41.1 | 84.3 | 49.3 | 40.3 | 26.0 | 36.2 |
| Median diameter d50 (µm) | 153 | 85 | 182 | 104 | 87 | 68 | 74 |
| Flexural modulus (GPa) | 2.5 | 2.7 | 2.0 | 2.5 | 2.7 | 2.4 | - |
| Flexural strength (MPa) | 75.7 | 94.3 | 63.4 | 86.6 | 92.6 | 78.6 | - |
| Surface of shaped article | 3 | 3 | 2 | 2 | 3 | 1 | - |
| Difference between initiation temperature and end temperature of recrystallization (°C) | 7.54 | 7.97 | 8.23 | 8.23 | 7.29 | 7.83 | 21.76 |

In Figs. 2 and 3, the DSC curve in Reference Example (Fig. 2) and that in Example 2 (Fig. 3) are shown as illustrations. In Reference Example in Fig. 2, the initiation temperature of recrystallization was 191.06°C, the end temperature of recrystallization was 169.30°C, and the difference between the initiation temperature and the end temperature was 21.76°C. In Example 2 in Fig. 3, the initiation temperature of recrystallization was 190.97°C, the end temperature of recrystallization was 183.00°C, and the difference between the initiation temperature and the end temperature was 7.97°C.

## Claims

1. A powder material for three-dimensional shaping, consisting of a powder comprising a resin and a cellulose material and having a cellulose material content of 2.0 to 30.0 mass%, wherein in particles composing the powder, a cumulative frequency of particles having a volume-weighted particle size within a range from 100 to 300 µm is 30.0% or more.

2. The powder material for three-dimensional shaping according to claim 1, wherein the particles composing the powder have a volume-weighted median diameter (d50) of 85 to 200 µm.

3. The powder material for three-dimensional shaping according to claim 1 or 2, wherein in the particles composing the powder, the cumulative frequency of the particles having a volume-weighted particle size within a range from 100 to 300 µm is 40.0% or more.

4. The powder material for three-dimensional shaping according to claim 1 or 2, wherein a difference between an initiation temperature and an end temperature of recrystallization is 20.0°C or less, as measured by a differential scanning calorimeter.

5. The powder material for three-dimensional shaping according to claim 1 or 2, wherein the resin comprises a thermoplastic resin.

6. The powder material for three-dimensional shaping according to claim 1 or 2, wherein the cellulose material comprises a fine cellulose fiber, pulp, or a mixture thereof.

7. The powder material for three-dimensional shaping according to claim 6, wherein the fine cellulose fiber is a modified fine cellulose fiber.

8. The powder material for three-dimensional shaping according to claim 7, wherein the modified fine cellulose fiber is an esterified cellulose fiber.

9. The powder material for three-dimensional shaping according to claim 1 or 2, wherein the resin comprises at least one selected from a polyamide, a polyolefin, or a polyester resin.

10. The powder material for three-dimensional shaping according to claim 9, wherein the polyamide is at least one selected from PA6, PA11, PA12, or PA610.

11. A three-dimensionally shaped article comprising a thermally joined body of the powder material for three-dimensional shaping according to claim 1 or 2.

12. A three-dimensionally shaped article comprising thermally joined body of the powder material for three-dimensional shaping according to claim 1 or 2, and an epoxy resin and/or acrylic resin in a gap in the thermally joined body.
